(19) 

**Europäisches Patentamt**
**European Patent Office**
**Office européen des brevets**

(11) **EP 4 660 141 A1**

(12) **EUROPEAN PATENT APPLICATION**
published in accordance with Art. 153(4) EPC

(43) Date of publication:
**10.12.2025 Bulletin 2025/50**

(21) Application number: **23920008.2**

(22) Date of filing: **26.12.2023**

(51) International Patent Classification (IPC):
***C01G 23/00*** *(2006.01)* ***C09C 1/00*** *(2006.01)*
***C09D 17/00*** *(2006.01)*

(52) Cooperative Patent Classification (CPC):
**C01G 23/00; C09C 1/00; C09D 17/00**

(86) International application number:
**PCT/JP2023/046535**

(87) International publication number:
**WO 2024/161873 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.01.2023 JP 2023011987**

(71) Applicant: **Toda Kogyo Corp.**
**Hiroshima-shi, Hiroshima 732-0828 (JP)**

(72) Inventors:
• **KAWAI Naho**
**Otake-shi, Hiroshima 739-0652 (JP)**
• **NAKATA Kenichi**
**Otake-shi, Hiroshima 739-0652 (JP)**

• **BITO Shin**
**Otake-shi, Hiroshima 739-0652 (JP)**
• **KAWAGUCHI Takamoto**
**Otake-shi, Hiroshima 739-0652 (JP)**
• **TAMARI Kousaku**
**Otake-shi, Hiroshima 739-0652 (JP)**
• **UEMOTO Shinji**
**Otake-shi, Hiroshima 739-0652 (JP)**
• **MITANI Yoshifumi**
**Otake-shi, Hiroshima 739-0652 (JP)**
• **KAWAI Yoshiki**
**Otake-shi, Hiroshima 739-0652 (JP)**
• **ZHANG Anyu**
**Otake-shi, Hiroshima 739-0652 (JP)**

(74) Representative: **Schiweck Weinzierl Koch**
**Patentanwälte Partnerschaft mbB**
**Ganghoferstraße 68 B**
**80339 München (DE)**

(54) **DISPERSION BODY INCLUDING STRONTIUM TITANATE SPHERICAL FINE PARTICLE POWDER AND METHOD FOR PRODUCING SAME**

(57) This disclosure relates to a dispersion containing a spherical strontium titanate fine particle powder and a solvent, and the dispersion is characterized in that the spherical strontium titanate fine particle powder in the dispersion has a dispersed particle size of less than 100 nm. It is uniformly dispersed in the dispersion solvent as a nano-order fine particle with narrow particle size distribution of particle size, and a composite thin film can be provided without white turbidity with achievement of both the transparency of the composite film and the dispersibility stability in resins, etc.

Processed by Luminess, 75001 PARIS (FR)

EP 4 660 141 A1

**Description**

TECHNICAL FIELD

The present invention relates to a dispersion of a spherical strontium titanate fine particle powder, in which a spherical strontium titanate fine particle powder is uniformly dispersed in a dispersion solvent as a nano-order fine particle with narrow particle size distribution of dispersed particle size, and which provides a composite film with transparency and is excellent in storage stability without causing sedimentation or separation, and a method for producing the same.

BACKGROUND ART

In recent years, with the miniaturization, high performance, and weight reduction of various electronic devices, there is an increasing need for organic-inorganic hybrid materials that maintain the processability of organic resins while providing the functionality of inorganic fillers (refractive index, dielectric constant, electrical conductivity, magnetism, thermal conductivity, etc.).

For example, brightness improvement films used in displays and diffractive optical elements used in AR/MR glasses, etc., require a high refractive index that cannot be achieved by resin alone in order to obtain characteristics such as high brightness, thin film, and improved viewing angle. Therefore, it has been considered to add inorganic fillers with a high refractive index to resins to improve the refractive index of resin films.

Inorganic fillers in such hybrid materials are required to be free from aggregation and have excellent dispersibility, and fine dispersions with narrow particle size distribution and high dispersion stability are required for ease of deployment in various applications.

On the other hand, strontium titanate is a highly functional material with a perovskite structure, and is used alone for various applications. For example, it is used in optical applications such as pigments utilizing its high refractive index, reflectors and light collectors, ceramic capacitor applications due to its high dielectric constant, and visible light photocatalysts utilizing its photocatalytic activity, and semiconductors, semiconductor capacitors, thermoelectric materials, EL, light-emitting materials, etc. utilizing its semiconductivity by adding other elements.

It is expected that a new material with functionality that cannot be achieved by resin alone can be produced by forming a composite of such highly functional strontium titanate and a resin.

Various reports have been conventionally made on strontium titanate fine particles (Patent Literatures 1 and 2).

CITATION LIST

PATENT LITERATURE

[Patent Literature 1] International Publication WO2019/123916
[Patent Literature 2] Japanese Laid-Open Patent Publication No. 2022-58093

SUMMARY OF INVENTION

TECHNICAL PROBLEM

However, although a strontium titanate fine particle powder suitable for the above-mentioned filler is currently most demanded, it has not yet been obtained.

That is, the above-mentioned Patent Literature 1 describes a strontium titanate dispersion, but since the average particle size is as large as $0.1 \ \mu m$ to $10 \ \mu m$, it is difficult to obtain sufficient transparency as a filler for a thin film composite.

In addition, the above-mentioned Patent Literature 2 reports on fine and spherical strontium titanate, but since the addition of a third component such as hydrazine or a hydrazide compound is essential, components other than strontium titanate are present, and the characteristics as a filler cannot be fully exhibited. Also, it is shown that the fine particles in which the amount of the third component added is not within the specified range have a large average particle size and poor dispersibility, and there is no mention of the dispersion stability of the fine particles.

Therefore, the present invention aims a dispersion containing a spherical strontium titanate fine particle suitable for composite materials, in which the average dispersed particle size in the dispersion is small and it is uniformly dispersed as a nano-order fine particle with narrow particle size distribution of dispersed particle size, thereby achieving both the dispersibility stability of the dispersion and the transparency of the composite film.

SOLUTION TO PROBLEM

The above technical problem can be solved by the present invention as follows.

That is, the present invention is a dispersion containing a spherical strontium titanate fine particle powder and a solvent, in which the dispersed particle size of the spherical strontium titanate fine particle powder in the dispersion is less than 100 nm (Invention 1).

The present invention also relates to a dispersion containing a spherical strontium titanate fine particle, the degree of achievement of dispersion of the spherical strontium titanate fine particle powder in the dispersion described in the present invention 1 being 5.0 or less as a ratio of the dispersed particle size of the spherical strontium titanate fine particle powder in the dispersion to the primary particle size of the spherical strontium titanate fine particle powder (invention 2).

The present invention also relates to a dispersion containing a spherical strontium titanate fine particle powder having a solubility parameter (sp value) of 7 to 25 of the solvent in the dispersion of the spherical strontium titanate fine particle powder (invention 3).

The present invention also relates to a method for producing a dispersion containing a spherical strontium titanate fine particle powder, having a first step of pre-dispersing a spherical strontium titanate fine particle powder having an average primary particle size of 50 nm or less in a solvent, and a second step of stirring and dispersing the dispersion containing the spherical strontium titanate fine particle powder obtained in the first step together with a medium (invention 4).

ADVANTAGEOUS EFFECTS OF INVENTION

According to the present invention, the average dispersed particle size of the dispersion containing a spherical strontium titanate fine particle is as small as less than 100 nm, so that the transparency of a composite film and dispersion stability can be achieved at the same time. In addition, the ratio of the average dispersed particle size to the average primary particle size is small, and it can be uniformly dispersed in a solvent as a nano-order fine particle with narrow particle size distribution, so that the dispersibility stability is high and there is no sedimentation over time, making it suitable for storage and transportation.

Furthermore, the method for producing a dispersion according to the present invention can be said to be industrially advantageous, since a uniformly monodispersed dispersion can be obtained in a shorter time by performing stepwise dispersion. The dispersion containing the spherical strontium titanate fine particle powder according to the present invention can be suitably used for high refractive index materials requiring high transparency, such as those used in anti-reflection films and lenses.

DESCRIPTION OF EMBODIMENTS

The configuration of the present invention is described in detail as follows.

First, the dispersion containing the spherical strontium titanate fine particle powder according to the present invention will be described.

The dispersion containing the spherical strontium titanate fine particle powder according to the present invention can be subjected to solid-liquid separation by centrifugal separation or standing still, and the average dispersed particle size in the supernatant is less than 100 nm, preferably 80 nm or less, more preferably 70 nm or less, and even more preferably 50 nm or less. If the average dispersed particle size is 100 nm or more, there is a risk that dispersion stability cannot be obtained, such as sedimentation occurring in the dispersion, or that the transparency of the composite thin film cannot be obtained. The lower limit is not particularly limited, but is about 8 nm.

The degree of achievement of dispersion of the spherical strontium titanate fine particle powder in the dispersion according to the present invention is represented by the ratio of the average dispersed particle size in the dispersion to the average primary particle size of the spherical strontium titanate fine particle powder (average dispersed particle size/average primary particle size). The degree of achievement of dispersion of the dispersion according to the present invention is preferably 5.0 or less, more preferably 3.5 or less, and even more preferably 2.0 or less. Within the above range, the dispersion contains few aggregates, so that the dispersion stability is excellent and the composite thin film gets transparency.

The spherical strontium titanate fine particle powder of the dispersion according to the present invention preferably has a circularity of 0.80 or more, more preferably 0.84 or more, and even more preferably 0.88 to 1.00. The reason for this is that if the circularity is less than 0.80, there is a risk of aggregation due to changes in the shape of the fine particle caused by cracking or the like.

The polydispersity index in the present invention is an index that represents the particle size distribution of the dispersed particle contained in the dispersion, and the lower the value, the smaller the variation in the average dispersed particle size. The polydispersity index of the spherical strontium titanate fine particle powder contained in the dispersion according to the present invention is preferably 0.35 or less, more preferably 0.30 or less, and even more preferably 0.29 or less. If the polydispersity index is more than 0.35, there is a risk of bias in the properties when composited. The lower limit of the polydispersity index is 0.

Next, the spherical strontium titanate fine particle powder of the present invention will be described.

The average primary particle size of the spherical strontium titanate fine particle powder of the present invention is preferably 50 nm or less. By setting the average primary particle size of the spherical strontium titanate fine particle powder within the above range, it can be uniformly dispersed in a thin film, and a transparent composite film can be obtained. The average primary particle size is more preferably 45 nm or less, and even more preferably 40 nm or less. The lower limit is not particularly limited, but is about 8 nm.

The BET specific surface area of the spherical strontium titanate fine particle powder of the present invention is preferably 23.4 $m^2$/g or more. When the BET specific surface area is less than 23.4 $m^2$/g, the average particle size of the spherical strontium titanate fine particle powder becomes larger than 50 nm. The BET specific surface area is more preferably 30.0 $m^2$/g or more, and even more preferably 35.0 $m^2$/g or more. The upper limit of the BET specific surface area is about 120.0 $m^2$/g.

The ratio (average primary particle size/BET equivalent particle size) of the average primary particle size to the BET equivalent particle size ($6000/(BET \times 5.13)$) of the spherical strontium titanate fine particle powder in the present invention is preferably 0.85 to 1.25. Within the above range, a spherical strontium titanate fine particle powder with few particle defects and narrow particle size distribution can be obtained. On the other hand, outside the above range, the composition cannot be stabilized, and there is a risk that dispersion stability is not obtained such as gelation or sedimentation of the dispersion. If this value is less than 0.85, the BET specific surface area is low relative to the average particle size, resulting in many coarse particles and poor distribution. If the value of the ratio is greater than 1.25, the BET specific surface area is high relative to the average particle size, resulting in many defects in the particles, such as low crystallinity. A more preferred range is 0.86 to 1.23, and even more preferred is 0.87 to 1.20.

The spherical strontium titanate fine particle powder in the present invention has a spherical particle shape, and the circularity is preferably 0.80 or more. If the circularity of the spherical strontium titanate fine particle powder is less than 0.80, the shape may be rectangular parallelepiped, etc., and the packing density may decrease. In addition, spherical particles with a circularity in the above range have a smaller specific surface area than rectangular parallelepiped particles, etc., so that the amount of a dispersant used can be reduced, and the refractive index and transparency can be increased when composited. A more preferred circularity is 0.82 or more, and even more preferably 0.84 to 1.00.

The Sr/Ti molar ratio of the spherical strontium titanate fine particle powder in the present invention is preferably 0.90 to 1.10. By controlling Sr/Ti within this range, various properties of strontium titanate, such as a high refractive index, can be exhibited. More preferably, Sr/Ti is 0.95 to 1.05, and even more preferably 0.98 to 1.02.

The refractive index of the spherical strontium titanate fine particle powder in the present invention is preferably 2.080 or more, and more preferably 2.187 or more, which is a highly crystalline fine particle powder. If the refractive index is within the above range, a transparent thin film can be formed.

The spherical strontium titanate fine particle powder in the dispersion according to the present invention is preferably coated or modified on a part or all of the particle surface with an additive. The additive has excellent adsorption to the surface of the spherical strontium titanate fine particle powder, with hydrophilic particle surface, and adheres, adsorbs, or bonds to the fine particle surface to become a steric hindrance, and detachment is suppressed, thereby improving compatibility with resins and solvents, and obtaining transparency and dispersion stability.

The additives in the present invention are not particularly limited as long as the average primary particle size and circularity of the spherical strontium titanate fine particle powder obtained from the dispersion are comparable to those of the spherical strontium titanate fine particle powder used in the dispersion, and examples thereof include surfactants, wetting activators, dispersants, etc. The additives in the present invention can be used alone or in combination of two or more depending on the compatibility with the dispersion solvent and resin and the intended use. When a coupling agent is used as an additive, a hydrolysis step is required because the coupling is performed by chemical reaction, but surfactants and dispersants are more preferred because the particle surface and the additive are bonded by hydrogen bonds, and when the particle surface and the dispersant come into contact with each other, the surface adsorption is attained, and the surface can be treated.

The surfactants in the present invention are not particularly limited, and examples thereof include anionic surfactants, nonionic surfactants, cationic surfactants, and amphoteric surfactants.

The dispersants in the present invention are not particularly limited, and examples thereof include polymer dispersants and low molecular weight dispersants. The more polymeric the dispersant, the more stable the steric hindrance can be secured, and the easier it is to obtain the dispersion stabilization effect, so it is preferable to use a polymer dispersant. As the polymer dispersant, alkylol ammonium copolymers containing an acid group, acrylic polymers, block copolymers, styrene-acrylic acid copolymers, styrene-maleic acid copolymers, polycarboxylic acids and their salts, etc. can be used, and those having acrylic acid groups or methacrylic acid groups are preferable.

The amount of the additive in the present invention is preferably 5 to 30% by weight, more preferably 7 to 27% by weight, and even more preferably 9 to 25% by weight, based on the spherical strontium titanate fine particle powder. If it is less than 5% by weight, the amount of the additive is small and the spherical strontium titanate fine particle powder is not sufficiently covered, so there is a risk that dispersion stability cannot be obtained. On the other hand, if it exceeds 30% by weight, the amount of the dispersant becomes excessive, and there is a risk that the dispersant layer collapses and dispersion stability cannot be obtained.

Since the dispersion according to the present invention contains a spherical and fine strontium titanate fine particle powder, the average dispersed particle size in the dispersion can be made less than 100 nm, and the transparency and stability of the composite thin film can be obtained. Furthermore, by containing a highly crystalline and highly refractive spherical strontium titanate fine particle powder that is small in particle size and has few particle defects such as compositional fluctuations, interparticle aggregation can be suppressed and the dispersion stability in the solvent can be improved. Therefore, the composite thin film does not become white-turbid, and the filler can be made to have high compatibility with various solvents and high dispersion stability, making it suitable for optical and electronic applications.

Next, a method for producing a spherical strontium titanate fine particle powder according to the present invention will be described.

The strontium titanate fine particle powder in the present invention can be obtained by neutralizing an aqueous titanium tetrachloride solution as a titanium raw material with an aqueous strontium hydroxide solution as an alkaline aqueous solution to obtain a titanium hydroxide hydrate slurry (neutralization reaction), then heating the titanium hydroxide hydrate slurry, washing it with water, adding it to an aqueous strontium hydroxide solution, and carrying out a wet reaction at a temperature range of 60 to 200°C.

The addition ratio (Sr/Ti) of the titanium raw material and the alkaline aqueous solution during the neutralization reaction is preferably 1.1 to 1.8 in molar ratio. If the addition ratio is less than 1.1, the production yield of strontium titanate core particles decreases, and if it exceeds 1.8, the distribution of primary particles of strontium titanate deteriorates. A more preferable addition ratio is 1.25 to 1.65.

After the neutralization reaction, regarding the water-washed CM of the resulting titanium hydroxide hydrate colloid, the CM of the colloid slurry is preferably 10 mS/cm or less, more preferably 8 mS/cm or less.

The pH of the reaction solution for producing a strontium titanate fine particle is preferably 11 to 13.5, and the range of the temperature thereof is preferably 60 to 300°C.

The reaction concentration of the reaction solution for producing a strontium titanate fine particle is preferably 0.05 to 0.7 mol/L in terms of titanium compound. If it is less than 0.05 mol/L, the yield is low and not industrially viable, and if it is 0.7 mol/L or more, the amount of strontium hydroxide in the reaction solution exceeds the solubility, causing $Sr(OH)_2$ to precipitate, making it difficult to carry out a uniform liquid phase reaction.

After the neutralization reaction, an aqueous solution of strontium hydroxide is added. The amount of the strontium hydroxide aqueous solution is added so that the molar ratio of Sr/Ti is 1.5 to 3.0 relative to Ti in the reaction solution.

It is preferable to control the reaction by flowing nitrogen during the reaction so that the strontium compound does not react with carbon dioxide gas in the air.

The reaction temperature of the wet reaction is preferably 60 to 300°C. If the reaction temperature of the wet reaction is less than 60°C, it is difficult to obtain a dense spherical strontium titanate fine particle. If the reaction temperature of the wet reaction is more than 300°C, it is difficult to design a hydrothermal vessel. The reaction temperature of the wet reaction is more preferably 65 to 250°C.

The particles after the wet reaction can be washed with water according to a conventional method and dispersed in water to form a suspension, or washed with water and then dried to form a dry powder. The particles after the wet reaction can be washed with water to wash away excess strontium. Impurities such as Na, K, and Cl can also be removed at the same time.

In the present invention, the desired strontium titanate fine particle powder can be obtained by controlling the reaction concentration, Sr/Ti during neutralization, and Sr/Ti during wet reaction.

In addition, in the present invention, a pulverization/de agglomeration treatment may be performed.

Next, a method for producing a dispersion containing a spherical strontium titanate fine particle powder according to the present invention will be described.

The method for producing a dispersion containing a spherical strontium titanate fine particle powder according to the present invention is characterized by a first step of pre-dispersing a spherical strontium titanate fine particle powder having an average primary particle size of 50 nm or less in a solvent, and a second step of stirring and dispersing the dispersion containing the spherical strontium titanate fine particle powder obtained in the first step together with a medium.

The spherical strontium titanate fine particle powder of the present invention may be prepared by washing the reaction cake with water, and the suspension may be used as it is, or the concentration of strontium titanate may be increased by suction filtration or centrifugal filtration, or the dried powder may be used.

In the first step of dispersion, the spherical strontium titanate fine particle powder of the present invention is pre-dispersed in a dispersion solvent. The dispersing machine used in the first step is not particularly limited, but is preferably a machine capable of applying shear force, impact force, compression force, and/or friction force to the powder layer, and examples of the dispersing machine that can be used include roller mills, high-speed rotary mills, high-speed rotary mills with built-in classifiers, ball mills, medium agitate mills, air flow pulverizers, compaction shear mills, colloid mills, roll mills, etc.

When a medium agitate mill is used in the first step of dispersion, the grinding medium that can be used may be, depending on the material of the mill, steel ball beads such as those made of stainless steel and steel; ceramic beads such as those made of alumina, steatite, zirconia, zircon, silica, silicon carbide, and silicon nitride; glass beads such as those made of soda glass and high-bee; and superhard beads such as those made of WC, and the like, and the size of the beads is preferably in the range of 0.05 to 2.0 mm, and more preferably in the range of 0.1 to 1.5 mm.

In the second dispersion step, the dispersion containing the spherical strontium titanate fine particle powder obtained in the first step is stirred together with a medium. As the dispersing machine used in the second step, a medium agitate mill can be suitably used, and a vertical bead mill is particularly preferred.

As the grinding medium (medium) used in the second step of dispersion, steel ball beads such as those made of stainless steel and steel; ceramic beads such as those made of alumina, steatite, zirconia, zircon, silica, silicon carbide, silicon nitride; glass beads such as those made of soda glass and hi-bee; superhard beads such as those made of WC can be used, depending on the material of the mill, and the size is preferably less than 100 $\mu$m, more preferably 50 $\mu$m or less, and the lower limit is preferably 1 $\mu$m.

Additives may be added to the dispersion of the present invention. The additives may be added directly to the dispersion solvent in the first step and/or the second step, or may be added to the spherical strontium titanate fine particle powder in advance or may be added to the dispersion solvent first. According to the above method, a part or the whole of the surface of the spherical strontium titanate fine particle powder is coated with the additive, and steric hindrance can be imparted to the fine particle surface. Therefore, a method of coating and modifying the surface of the fine particle by mixing the spherical strontium titanate fine particle powder with the additive while deagglomeration is preferred.

The mixing time of the additives in the present invention is not particularly limited, but it is preferable to mix them by stirring at room temperature for about 30 minutes. The dispersion time is not particularly limited, but it is preferably 1 hour or more. There is no particular upper limit, and 10 hours or more is also no problem.

The dispersion according to the present invention may be centrifuged or filtered to remove coarse particles and impurities. The solvent of the dispersion may be removed by drying. The drying method may be a heat dryer, a reduced pressure dryer, an evaporator, a vacuum stirring dryer, etc., but is not particularly limited, as long as it is a method that can obtain a spherical strontium titanate fine particle powder by drying.

The dispersion containing the spherical strontium titanate fine particle powder according to the present invention may be obtained by dissolving the dry powder obtained in the previous step in a solvent again, or it can be obtained as a dispersion containing spherical strontium titanate without going through the previous drying step. In addition to the above-mentioned fine particle powder, dispersants, additives (resins, antifoaming agents, assistants, etc.) and the like may be added as necessary as the constituent base material of the dispersion containing the fine particle powder.

The solvent used for the dispersion in the present invention may be either aqueous or solvent-based, and may be used alone or in a mixture of two or more depending on the purpose and use.

As the aqueous solvent, water or, alcohol-based solvents such as methyl alcohol, ethyl alcohol, propyl alcohol, isopropyl alcohol, and butyl alcohol; glycol ether-based solvents such as methyl cellosolve, ethyl cellosolve, propyl cellosolve, and butyl cellosolve; oxyethylene or oxypropylene addition polymers such as diethylene glycol, triethylene glycol, polyethylene glycol, dipropylene glycol, tripropylene glycol, and polypropylene glycol; alkylene glycols such as ethylene glycol, propylene glycol, and 1,2,6-hexanetriol; water-soluble organic solvents such as glycerin and 2-pyrrolidone, can be used. These dispersion solvents for aqueous dispersions may be used alone or in a mixture of two or more depending on the purpose and use.

As the solvent-based solvent, aromatic hydrocarbons such as toluene and xylene; ketones such as methyl ethyl ketone and cyclohexanone; amides such as N,N-dimethylformamide, N,N-dimethylacetamide and N-methylpyrrolidone; ether alcohols such as ethylene glycol monomethyl ether, ethylene glycol monoethyl ether, diethylene glycol monomethyl ether, propylene glycol monomethyl ether and propylene glycol monoethyl ether; ether acetates such as ethylene glycol monomethyl ether acetate, ethylene glycol monoethyl ether acetate, propylene glycol monomethyl ether acetate and propylene glycol monoethyl ether acetate; acetate esters such as ethyl acetate, butyl acetate and isobutyl acetate; lactate esters such as methyl lactate, ethyl lactate and propyl lactate; cyclic esters such as ethylene carbonate, propylene carbonate and $\gamma$-butyrolactone, and various monomers, etc. can be used. These dispersion solvents for the solvent-based dispersions can be used alone or in a mixture of two or more depending on the intended use.

The unit of the solubility parameter (SP value) of the solvent in the present invention is $(cal/cm^3)^{1/2}$. The solubility parameter of the solvent in the present invention is preferably 5 to 25, more preferably 6 to 20, and even more preferably 7 to 15. Examples of solvents with SP values of 5 to 25 include dimethylcyclohexane, and examples of solvents with SP values of 6 to 20 include n-pentane and formamide, and examples of solvents with SP values of 7 to 15 include n-hexane, methyl ethyl ketone, propylene glycol monomethyl ether acetate, and 2-methoxyethanol. Since the solvent is compatible with the fine particles within the above range, the dispersion stability of the dispersion can be obtained, and a stable dispersion can be obtained without fine particle sedimentation.

The concentration of the spherical strontium titanate fine particle powder, which is the solid content in the dispersion according to the present invention, is not particularly limited as long as it is sufficient to maintain fluidity without causing any sedimentation, separation, solidification, or gelation, but is preferably about 10 to 60% by weight based on the total weight. If the concentration of the spherical strontium titanate fine particle powder, which is the solid content in the dispersion, is less than 10% by weight, the productivity for use in the next step is low, and if it exceeds 60% by weight, there is a risk that the fluidity of the dispersion will not be obtained.

In the dispersion of the present invention, the reason why the dispersed spherical strontium titanate fine particle powder can be almost monodispersed in various solvents is not yet clear, but the inventors presume as follows. That is, the first dispersion step allows the spherical fine particle to be dispersed in the solvent while disintegrating the agglomerates. Thereafter, by further promoting the disintegration of the agglomerates in the second step, a part of the solvent, additives, etc. can cover the surface of the spherical particles, or react with the hydrophilic group on the particle surface. The inventors interpret that by going through the stepwise dispersion process, the coarse particles of the spherical strontium titanate fine particle can be broken down, the surface of the spherical strontium titanate fine particle powder can be made hydrophobic in a state in which the aggregation between particles is suppressed, the spherical fine particle is monodispersed in the solvent, thus, a dispersion with dispersion stability can be obtained. In fact, a stable dispersion state can be obtained with an average aggregate particle size of less than 100 nm.

Furthermore, the fine and highly crystalline spherical strontium titanate fine particle powder with few particle defects such as composition fluctuation contained in the dispersion of the present invention can be uniformly dispersed in a solvent while maintaining its circularity. Therefore, a dispersion with high dispersion stability can be obtained without aggregation or sedimentation in the solvent, and a thin film with high transparency and no white turbidity can be formed.

EXAMPLES

Examples of the present invention are shown below, but the present invention is not limited to these.

[Average primary particle size]

The average primary particle size was measured from about 50 particles in a photograph (25,000 × magnification) of the spherical strontium titanate fine particle powder observed with a transmission electron microscope (JEM-F200, manufactured by JEOL Ltd.). Here, the average primary particle size is the size of the diameter of a circle having the same area as that determined from the photograph for each particle, and averaged for all particles measured. The particle shape was determined from the electron microscope photograph described above.

[Circularity]

The circularity of the particle powder and the dispersed particle was expressed as $(4\pi \times area)/perimeter^2$ of the particle measured from the electron microscope photograph described above.

[Average dispersed particle size and polydispersity index]

The average dispersed particle size was measured for each dispersion using a dynamic light scattering method ("FPAR-1000: manufactured by Otsuka Electronics Co., Ltd.") and obtained by cumulant analysis. At the same time, the polydispersity index, which indicates the particle size distribution, was measured by histogram analysis.

[Dispersion Sedimentation Test]

A dispersion sedimentation test was performed to evaluate the dispersion stability. A dispersion containing spherical strontium titanate fine particle powder was stored at 25°C, and the presence or absence of sedimentation was visually confirmed after one month, and those that did not have sedimentation were marked with ○, and those that did have sedimentation were marked with ×.

[Specific surface area and BET equivalent particle size]

The specific surface area value was shown as a value ($m^2/g$) measured by the BET method. The BET equivalent particle size (nm) was calculated using the relational expression: 6000/(BET specific surface area × 5.13). Here, 5.13 is

the density (g/cm$^3$) of strontium titanate. The ratio (average primary particle size/BET equivalent particle size) was calculated from the average primary particle size and the BET equivalent particle size.

[Particle density]

The particle density was measured using a particle density measuring device BELPYCNO (manufactured by MicrotracBEL Corp.).

[Refractive index of dispersion]

Dispersions were prepared by mixing 2 g of each strontium titanate fine particle powder with 8 g of 2-methoxypropanol for 120 minutes to prepare dispersions with a solid content of 20% by weight. The refractive index of the dispersion was measured using a refractive index measuring device, Abbe refractometer RX-7000$\alpha$ (manufactured by ATAGO Co., Ltd.).

[Refractive index of particle]

The refractive index of the strontium titanate fine particle powder was calculated according to the following formula using the particle density of the fine particle powder, the refractive index of the dispersion, and the solid content in the dispersion. When the dispersion is considered to be a composite of a solvent and a filler (powder), the refractive index n of the dispersion can be calculated by the following formula (1). V1 is the volume fraction of the filler, n1 is the refractive index of the filler, V2 is the volume fraction of the solvent, and n2 is the refractive index of the solvent. In other words, the refractive index of the filler can be calculated from the measured refractive index and the volume fraction of each component in the dispersion.

[Mathematical formula 1]

$$n = V1 \times n1 + V2 \times n2 \dots (1)$$

The refractive index n1 of the filler is given by the following formula (2). Since it is difficult to actually measure the volume fraction in the dispersion, the weight fractions w1 (filler), w2 (solvent) and densities d1 (filler), d2 (solvent) of each component, which are easy to measure, are converted into the following formulas (3) and (4), respectively. The refractive index of the filler can be obtained by substituting formulas (3) and (4) into formula (2).

[Mathematical formula 2]

$$n1 = \frac{n - n2 \times V2}{V1} \dots (2)$$

[Mathematical formula 3]

$$V1 = \frac{\dfrac{w1}{d1}}{\dfrac{w1}{d1} + \dfrac{w2}{d2}} \dots (3)$$

[Mathematical formula 4]

$$V2 = \frac{\dfrac{w2}{d2}}{\dfrac{w1}{d1} + \dfrac{w2}{d2}} \dots (4)$$

[Solid content in dispersion]

The solid content in the dispersion is calculated from formula (5) by calcinating the strontium titanate dispersion in a muffle furnace at 300°C for 1 hour, and is shown in weight %.

[Mathematical formula 5]

$$\text{weight after calcination (g)/weight before calcination (g)} \times 100 \qquad (5)$$

[Mole ratio of Sr/Ti]

Sr/Ti was measured using a fluorescent X-ray analyzer (ZSX Primus II, manufactured by Rigaku Holdings Corporation).

[Evaluation of total light transmittance and thin film white turbidity]

The total light transmittance of each coating film was measured using a turbidity meter (NDH2000 manufactured by Nippon Denshoku Industries Co., Ltd.). The transmittance obtained when measured in air was evaluated as 100%, and the total light transmittance of each coating film is preferably 90% or more. The evaluation of thin film white turbidity was performed by visually observing each coating film, and those without white turbidity were marked with ○ and those with white turbidity with ×.

Example 1

A strontium hydroxide aqueous solution and a titanium tetrachloride aqueous solution were added so that the molar ratio of Sr to Ti was 1.32, and a neutralization reaction was carried out, followed by washing with water to obtain a titanium hydroxide slurry. The strontium hydroxide aqueous solution and the titanium hydroxide slurry obtained above were charged into a reaction vessel so that the molar ratio of Sr to Ti was 2.0, and then a hydrothermal reaction was carried out at 260°C for 8 hours to obtain a white powder of strontium titanate fine particles.

The obtained spherical strontium titanate fine particle powder was made of spherical particles with a primary average particle size of 22.12 nm and a circularity of 0.92, and Sr/Ti was 0.98, particle density was 4.71 g/cc, BET specific surface area was 45.9 m$^2$/g, BET equivalent particle size was 25.5 nm, and the ratio of average primary particle size/BET equivalent particle size was 0.87. In addition, the solid content in the dispersion adjusted to calculate the particle refractive index was 19.72 wt%, the refractive index of the dispersion was 1.440, and the calculated particle refractive index was 2.196.

As the first step of dispersion, 10.5 g of the spherical strontium titanate fine particle powder obtained in the previous step was added to 59.5 g of 2-methoxyethanol in a 200 mL mayonnaise bottle. ZrO$_2$ beads of 100 $\mu$mΦ diameter (Zirconia Ball YTZ series, manufactured by Nikkato Corporation) were added and the mixture was dispersed for 1 hour using a paint shaker (manufactured by Toyo Seiki Seisaku-sho, Ltd.), after which the beads were removed to obtain a dispersion with a solid content of 15% by weight.

Next, as the second step, a new mayonnaise bottle was prepared, and the dispersion containing the spherical strontium titanate fine particle powder obtained in the previous stage, an additive (Disperbyk-180, manufactured by BYK-Chemie) in an amount of 10% by weight relative to the spherical strontium titanate fine particle powder, and ZrO$_2$ beads of 50 $\mu$mΦ diameter (Zirconia Ball YTZ series, manufactured by Nikkato Corporation) were added, and the mixture was again dispersed for 4 hours using a paint shaker (manufactured by Toyo Seiki Seisaku-sho, Ltd.). The ZrO$_2$ beads were removed to obtain a dispersion containing the spherical strontium titanate fine particle powder.

The dispersion was dried at 80°C for 12 hours in a high-temperature thermostat, and a spherical strontium titanate fine particle powder was obtained from the dispersion.

Table 1 shows the various properties of the dispersion, and Table 2 shows the various properties and effects of the spherical strontium titanate fine particle powder obtained from the dispersion.

[Table 1]

| | average dispersed particle size (nm) | degree of achievement of dispersion (average dispersed particle size/average primary particle size) | dispersion solvent | sp value of dispersion solvent [(cal/cm$^3$)$^{1/2}$] | polydispersity index | circularity of dispersed particle | additive [amount added: % by weight] |
|---|---|---|---|---|---|---|---|
| Example 1 | 26.1 | 1.18 | 2-methoxyethanol | 10.2 | 0.290 | 0.88 | Disperbyk-180 [10% by weight] |
| Example 2 | 38.5 | 1.68 | 2-methoxyethanol | 10.2 | 0.251 | 0.88 | Disparlon AQ-380 [10% by weight] |
| Example 3 | 44.0 | 1.94 | PGMEA | 9.4 | 0.160 | 0.91 | Disperbyk-190 [20% by weight] |
| Example 4 | 31.2 | 1.40 | MEK | 9.3 | 0.223 | 0.90 | Disparlon AQ-380 [20% by weight] |
| Example 5 | 30.1 | 1.42 | MEK | 9.3 | 0.281 | 0.94 | Disperbyk-190 [10% by weight] |
| Comparative Example 1 | 114.3 | 1.32 | MEK | 9.3 | 0.092 | 0.88 | Disperbyk-190 [20% by weight] |

[Table 2]

| | Various properties of spherical strontium titanate fine particle powder obtained from dispersion | | effect | | |
|---|---|---|---|---|---|
| | average primary particle size [nm] | circularity | total light transmittance [%] | evaluation of thin film white turbidity no white turbidity → ○ with white turbidity → X | dispersion sedimentation test |
| Example 1 | 22.08 | 0.88 | 90.0 | ○ | ○ |
| Example 2 | 22.92 | 0.88 | 91.0 | ○ | ○ |
| Example 3 | 22.66 | 0.91 | 90.5 | ○ | ○ |
| Example 4 | 22.27 | 0.90 | 90.8 | ○ | ○ |
| Example 5 | 21.21 | 0.94 | 90.7 | ○ | ○ |
| Comparative Example 1 | 86.90 | 0.88 | 91.3 | × | × |

Examples 2 to 5

A dispersion containing a spherical strontium titanate fine particle powder and a spherical strontium titanate fine particle powder were obtained in the same manner as in Example 1, except that the dispersion solvent and additives were changed as shown in Table 1.

Comparative Example 1

A strontium hydroxide aqueous solution and a titanium tetrachloride aqueous solution were added so that the molar ratio of Sr to Ti was 1.6, and a neutralization reaction was carried out. Then, the strontium hydroxide aqueous solution and the titanium hydroxide slurry obtained above were put into a reaction vessel so that the molar ratio of Sr to Ti was 1.5, and the reaction was carried out at 90°C for 3 hours to obtain a white powder of strontium titanate fine particles.
The obtained strontium titanate fine particle powder is composed of spherical particles with a primary average particle size of 84.36nm and a circularity of 0.90, and the Sr/Ti was 1.07, the particle density was 4.30g/cc, the BET specific surface area was 24.8 $m^2$/g, the BET equivalent particle size was 47.2nm, and the ratio of average primary particle size/BET equivalent particle size was 1.79. In addition, the solid content in the dispersion adjusted to calculate the particle refractive index was 19.66% by weight, the refractive index of the dispersion was 1.437, and the calculated particle refractive index was 2.075.
A dispersion containing a spherical strontium titanate fine particle powder and a spherical strontium titanate fine particle powder were obtained in the same manner as in Example 1, except that the dispersion solvent and additives were changed as shown in Table 1.
Next, the preparation of a coating film for evaluating total light transmittance and thin film white turbidity will be described.
Two grams (2 g) of the dispersion prepared in the previous stage and 3 g of a mixed resin (CN2283 (polyester acrylate manufactured by Sartomer)/SR833 (tricyclodecane dimethanol diacrylate manufactured by Sartomer)) + a photopolymerization initiator (Omnirad380 (bis(2,4,6-trimethylbenzoyl)-phenylphosphoroxide) manufactured by IGM RESINS)) were mixed into a 30 mL sample bottle to prepare a coating solution containing each strontium titanate fine particle (solid content 9%). The coating solution was applied to a PET film (Luminar, manufactured by Toray Industries, Inc.) to a thickness of 12 μm using a K HAND COATER manufactured by RK PrintCoat Instruments Ltd., and cured using an area irradiator (for UV curing) manufactured by CCS Inc. to produce a coating film.
As shown in Table 2, it was confirmed that the coating films using the strontium titanate fine particle powder obtained in Examples 1 to 5 were free of white turbidity and had excellent transparency. It was also confirmed that the dispersion did not cause sedimentation and had excellent dispersion stability.

INDUSTRIAL APPLICABILITY

According to the present invention, a spherical strontium titanate fine particle powder suitable for a filler in a composite material is produced, in which it is uniformly dispersed in a dispersion solvent as a nano-order fine particle with narrow particle size distribution of particle size, and the transparency of the composite film and the dispersibility stability in resins, etc. can be achieved at the same time. The strontium titanate according to the present invention is a fine particle, and therefore can be made thin and maintain a high light transmittance. In addition, the dispersion is suitable for storage and transportation because it does not cause sedimentation over time, and thus can achieve both dispersion stability and transparency. The spherical strontium titanate fine particle powder contained in the dispersion of the present invention can control the average particle size according to the purpose, and the spherical shape makes it easy to increase the filler packing density in the composite. Therefore, the dispersion of the present invention is optimal for a high refractive index inorganic filler for increasing the refractive index of a resin composition in a diffractive optical element used in a brightness improvement film used in a display or an XR (AR, MR, VR) glass, or a high dielectric inorganic filler of a high dielectric resin composition that can be used in electronic components such as a thin film transistor (TFT).

**Claims**

1. A dispersion comprising a spherical strontium titanate fine particle powder and a solvent, wherein the average dispersed particle size of the spherical strontium titanate fine particle powder in the dispersion is less than 100 nm.

2. The dispersion according to claim 1, wherein degree of achievement of dispersion of the spherical strontium titanate fine particle powder is 5.0 or less as a ratio of the average dispersed particle size in the dispersion to the average primary particle size of the spherical strontium titanate fine particle powder obtained from the dispersion.

3. The dispersion according to claim 1, wherein solubility parameter (sp value) of the solvent is 7 to 25 $(cal/cm^3)^{1/2}$.

4. A method for producing a dispersion comprising s spherical strontium titanate fine particle powder, comprising a first step of pre-dispersing a spherical strontium titanate fine particle powder having an average primary particle size of 50 nm or less in a solvent, and a second step of stirring and dispersing the dispersion containing the spherical strontium titanate fine particle powder obtained in the first step together with a medium.

## INTERNATIONAL SEARCH REPORT

| International application No. |
| :-- |
| **PCT/JP2023/046535** |

| A. | CLASSIFICATION OF SUBJECT MATTER |
| :-- | :-- |

*C01G 23/00*(2006.01)i; *C09C 1/00*(2006.01)i; *C09D 17/00*(2006.01)i
FI:  C01G23/00 C; C09C1/00; C09D17/00

According to International Patent Classification (IPC) or to both national classification and IPC

| B. | FIELDS SEARCHED |
| :-- | :-- |

Minimum documentation searched (classification system followed by classification symbols)

C01G23/00; C09C1/00; C09D17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| :-- | :-- |

| Category* | Citation of document, with indication, where appropriate, of the relevant passages | Relevant to claim No. |
| :-- | :-- | :-- |
| X | CN 114873637 A (NEWMAT (BEIJING) ENVIRONMENTAL MATERIALS TECHNOLOGY CORPORATION) 09 August 2022 (2022-08-09) claims, paragraphs [0045]-[0048], [0060], table 1, fig. 1-3 | 1-3 |
| A | | 4 |
| X | JP 2022-58093 A (SAKATA INX CORP.) 11 April 2022 (2022-04-11) claims, paragraphs [0041]-[0048], table 1 | 1-3 |
| A | | 4 |
| X | JP 2014-58417 A (ASAHI KASEI E-MATERIALS CORP.) 03 April 2014 (2014-04-03) claims, paragraphs [0037], [0040], table 1 | 1-3 |
| A | | 4 |
| X | JP 2014-76924 A (ASAHI KASEI E-MATERIALS CORP.) 01 May 2014 (2014-05-01) claims, paragraphs [0036]-[0038], [0080] | 4 |
| A | | 1-3 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| :-- | :-- | :-- | :-- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| :-- | :-- |
| **08 March 2024** | **19 March 2024** |

| Name and mailing address of the ISA/JP | Authorized officer |
| :-- | :-- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/046535**

| Patent document cited in search report | | | Publication date (day/month/year) | Patent family member(s) | | | Publication date (day/month/year) |
|---|---|---|---|---|---|---|---|
| CN | 114873637 | A | 09 August 2022 | (Family: none) | | | |
| JP | 2022-58093 | A | 11 April 2022 | CN | 116057006 | A | |
| | | | | KR 10-2023-0075394 | | A | |
| JP | 2014-58417 | A | 03 April 2014 | (Family: none) | | | |
| JP | 2014-76924 | A | 01 May 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019123916 A

- JP 2022058093 A